# EUROPÄISCHE PATENTSCHRIFT

(11) **EP 3 507 882 B1**
(45) Veröffentlichungstag und Bekanntmachung des Hinweises auf die Patenterteilung: **11.05.2022**
(21) Anmeldenummer: 17794906.2
(22) Anmeldetag: 18.10.2017
(51) Int. Cl.: H02J 1/10

(54) **ELEKTRISCHE EINRICHTUNG UND VERFAHREN ZU DEREN WARTUNG**
ELECTRICAL DEVICE AND METHOD FOR THE MAINTENANCE THEREOF
DISPOSITIF ÉLECTRIQUE ET SON PROCÉDÉ DE MAINTENANCE

(30) Priorität: 31.10.2016 DE 102016221405
(43) Veröffentlichungstag der Anmeldung: 10.07.2019
(73) Patentinhaber: Siemens Energy Global GmbH & Co. KG, 81739 München (DE)
(72) Erfinder: BÖHM, Matthias, 91564 Neuendettelsau (DE); SCHMITT, Daniel, 92353 Postbauer-Heng (DE)
(86) Internationale Anmeldenummer: PCT/EP2017/076549
(87) Internationale Veröffentlichungsnummer: WO 2018/077680

(56) Entgegenhaltungen:
- WO-A1-2016/021841
- CN-B- 103 354 232
- JP-A- H07 176 687
- US-A1- 2016 294 166

## Beschreibung

Die Erfindung betrifft eine elektrische Einrichtung mit einem leistungselektronischen Modul in einer Tragestruktur.

Eine solche Einrichtung ist aus der EP 2 800 133 A1 bekannt. Die bekannte elektrische Einrichtung bildet ein Ventil einer Hochspannungsgleichstromübertragungsanlage (HGÜ-Anlage). Das leistungselektronische Modul der bekannten elektrischen Einrichtung ist in Reihe mit weiteren, gleichartigen Modulen in einem Ventilturm angeordnet, das die Tragestruktur für das Modul darstellt. Das leistungselektronische Modul wird zu Wartungszwecken aus der Tragestruktur heraus bewegt. Das Modul kann dabei auf dazu eingerichteten Schienen aus der Tragestruktur zu deren Frontseite herausgefahren werden.

Die bekannte elektrische Einrichtung weist den Nachteil auf, dass sie nicht in einem modularen Mehrstufenumrichter einer HGÜ-Anlage eingesetzt werden kann.

In einem modularen Mehrstufenumrichter umfasst die elektrische Einrichtung einen Energiespeicher, der parallel zum leistungselektronischen Modul geschaltet ist. Sowohl das leistungselektronische Modul als auch der Energiespeicher sind üblicherweise in der Tragestruktur räumlich nebeneinander angeordnet und miteinander elektrisch verbunden.

Aus der US 2016/0294166 A1 ist eine Anordnung mit einem leistungselektronischen Modul und einem Energiespeicher bekannt. Bei dieser bekannten Anordnung werden das Modul und der Energiespeicher in einem Wartungsfall gemeinsam aus der die beiden tragenden Tragestruktur frontal herausgefahren und danach voneinander getrennt.

Die Aufgabe der Erfindung besteht darin, eine artgemäße elektrische Einrichtung vorzuschlagen, die auch in einer HGÜ-Anlage mit einem modularen Mehrstufenumrichter einsetzbar ist.

Die Aufgabe wird bei einer artgemäßen elektrischen Einrichtung dadurch gelöst, dass die elektrische Einrichtung ferner einen Energiespeicher umfasst, wobei der Energiespeicher und das leistungselektronischen Modul gemeinsam in der Tragestruktur angeordnet und miteinander lösbar verbunden sind, wobei der Energiespeicher bewegbar gelagert ist.

Erfindungsgemäß kann demnach zu Wartungszwecken die Verbindung zwischen dem leistungselektronischen Modul und dem Energiespeicher gelöst werden, worauf der Energiespeicher innerhalb oder teilweise aus der Tragestruktur heraus verlagert werden kann.

Ein Vorteil der erfindungsgemäßen elektrischen Einrichtung besteht darin, dass durch die ermöglichte Verlagerung des Energiespeichers genügend Freiraum geschaffen werden kann, um das leistungselektronische Modul aus der Tragestruktur herauszulösen. Auf diese Weise ist beispielsweise ein Austausch eines fehlerhaften Moduls ermöglicht.

Erfindungsgemäß kann durch Bewegen des Energiespeichers ein Abstand zum leistungselektronischen Modul vergrößert werden. Beispielsweise kann die Tragestruktur eine Frontseite aufweisen, wobei an der Frontseite der Tragestruktur eine Wartungsbühne angeordnet werden kann. Bei Wartungsarbeiten an der elektrischen Einrichtung kann ein Wartungsarbeiter mittels der Wartungsbühne Zugang zur elektrischen Einrichtung erlangen. Das leistungselektronische Modul ist an der Frontseite angeordnet, wobei der Energiespeicher an einer Rückseite angeordnet ist. Dabei ist der Energiespeicher derart bewegbar gelagert, dass er zur Rückseite hin verlagerbar ist, wobei der Abstand zwischen dem Modul und dem Energiespeicher vergrößerbar ist. Bei dieser Anordnung kann das Modul zur Frontseite hin oder nach oben aus der Tragestruktur entnommen werden.

Vorzugsweise umfasst die Tragestruktur Führungsschienen, so dass der Energiespeicher entlang der Führungsschienen verlagerbar ist. Die Führungsschienen können unterhalb und/oder oberhalb des Energiespeichers angeordnet sein. Die Führungsschienen erleichtern die Verlagerung des Energiespeichers und verhindern beispielsweise ein Verkanten während einer Verschiebung des Energiespeichers.

Gemäß einer Ausführungsform der Erfindung umfasst die Einrichtung ein Spindelsystem zum Bewegen des Energiespeichers. Das Spindelsystem umfasst bevorzugt eine drehbare Spindel, die derart mit dem Energiespeicher verbunden ist, dass mittels einer Drehung der Spindel der Energiespeicher verlagerbar ist. Mit anderen Worten ist eine Drehbewegung einer drehbaren Spindel des Spindelsystems in eine Längsbewegung des Energiespeichers übertragbar. Das Spindelsystem kann beispielsweise durch einen Wartungsarbeiter bedienbar sein. Auf diese Weise kann der Wartungsarbeiter von einer Wartungsbühne aus den Energiespeicher verlagern, ohne selbst in die Tragestruktur eingreifen zu müssen. Das Spindelsystem kann ein Längs- oder ein Querspindelsystem sein.

Bevorzugt ist die lösbare Verbindung zwischen Modul und Energiespeicher eine lösbare Klemmverbindung. Eine solche Klemmverbindung kann beispielsweise eine Klemme umfassen, die dazu eingerichtet ist, die Anschlüsse des Moduls und des Energiespeichers miteinander zu verklemmen. Eine Klemmverbindung stellt, insbesondere gegenüber einer Verschraubung, eine zuverlässige und zugleich leicht lösbare elektrische Verbindung dar. Vorteilhaft entfällt hierbei die Lösung massiver Schraubverbindungen, was den Zeitaufwand reduziert. Es werden zudem vorzugsweise keine losen Befestigungselemente verwendet, die bei Wartungsarbeiten aufwändig aufbewahrt werden müssen.

Gemäß einer Ausführungsform der Erfindung umfasst das leistungselektronische Modul wenigstens einen Leistungshalbleiterschalter. Der Leistungshalbleiterschalter kann beispielsweise ein IGBT, IGCT oder dergleichen sein. Der Leistungshalbleiterschalter weist bevorzugt eine Spannungsfestigkeit von mehr als 1 kV auf.

Der Energiespeicher kann beispielsweise ein Kondensator, insbesondere ein Leitungskondensator sein, der über ein eigenes Gehäuse verfügt.

Gemäß einer Ausführungsform der Erfindung ist das leistungselektronische Modul in einem Spannverband mechanisch verspannt. Demnach umfasst die elektrische Einrichtung eine Mehrzahl von leistungselektronischen Modulen, die in einem Spannverband miteinander mechanisch verspannt sind. Die mechanische Verspannung erfolgt bevorzugt mittels einer Spannvorrichtung. Die Spannvorrichtung umfasst bevorzugt Druckstücke und Spannschrauben. Dabei kann die Tragestruktur zumindest einen Teil der Spannvorrichtung bilden. Die Spannschrauben stellen eine benötigte Spannkraft bereit. Die Druckstücke übertragen die mechanische Spannkraft auf die Module. Das leistungselektronische Modul kann mit den weiteren, beispielsweise gleichartig aufgebauten Modulen, sowie Kühlvorrichtungen und anderen Bauteilen den Spannverband bilden. Bei dieser Anordnung ist das leistungselektronische Modul fest im Spannverband fixiert. Eine Bewegbarkeit des Moduls zu dessen Entnahme aus der Tragestruktur in einem Wartungsfall ist ohne Weiteres nicht möglich. Erst durch die Bewegbarkeit des mit dem Modul verbundenen bzw. verbindbaren Energiespeichers ist eine Möglichkeit geschaffen, das Modul aus der Tragestruktur zu entfernen.

Bevorzugt weist das Modul eine Arbeitsspannung von 1 kV bis 10 kV auf. Diese Arbeitsspannung liegt in einem Normalbetrieb des Moduls an seinen Anschlussklemmen an. Das Modul kann in einer Reihenschaltung mit weiteren, bevorzugt gleichartig aufgebauten Modulen zu einem Umrichterventil verschaltet sein. Die auf diese Weise erreichbare Gesamt-Arbeitsspannung des Umrichterventils kann bis über 1000 kV betragen.

Die Erfindung betrifft des Weiteren ein Verfahren zum Warten einer elektrischen Einrichtung mit einem leistungselektronischen Modul sowie einem Energiespeicher, die gemeinsam in einer Tragestruktur angeordnet sind und miteinander lösbar verbunden sind.

Die Aufgabe der Erfindung besteht darin, ein solches Verfahren vorzuschlagen, das eine möglichst einfache und zuverlässige Wartung der elektrischen Einrichtung ermöglicht.

Die Aufgabe wird durch ein artgemäßes Verfahren gelöst, bei dem im Falle eines Fehlers des Moduls die Verbindung zwischen dem Modul und dem Energiespeicher gelöst wird, der Energiespeicher bewegt wird, wobei ein Abstand zwischen dem Energiespeicher und dem Modul vergrößert wird, und das Modul aus der Tragestruktur herausgenommen wird.

Ein Vorteil des erfindungsgemäßen Verfahrens liegt darin, dass eine Wartung auch in Anlagen durchgeführt werden kann, wo das Modul nicht innerhalb der Tragestruktur bewegbar gelagert ist. Stattdessen kann durch die Verlagerung des bewegbar gelagerten Energiespeichers genügend Freiraum geschaffen werden, um das leistungselektronische Modul aus der Tragestruktur einfach und zuverlässig herauszulösen.

Das erfindungsgemäße Verfahren ist selbstverständlich im Zusammenhang mit allen zuvor beschriebenen Varianten der erfindungsgemäßen elektrischen Einrichtung durchführbar.

Die Erfindung soll im Folgenden anhand der Figuren 1 bis 3 näher erläutert werden.
Figur 1 zeigt ein Ausführungsbeispiel einer erfindungsgemäßen elektrischen Einrichtung in einer schematischen Übersichtsdarstellung;
Figur 2 zeigt die erfindungsgemäße elektrische Einrichtung der Figur 1 in einer schematischen Seitenansicht;
Figur 3 zeigt eine Anordnung zur Durchführung eines erfindungsgemäßen Verfahrens zur Wartung einer erfindungsgemäßen elektrischen Einrichtung in einer schematischen Darstellung.

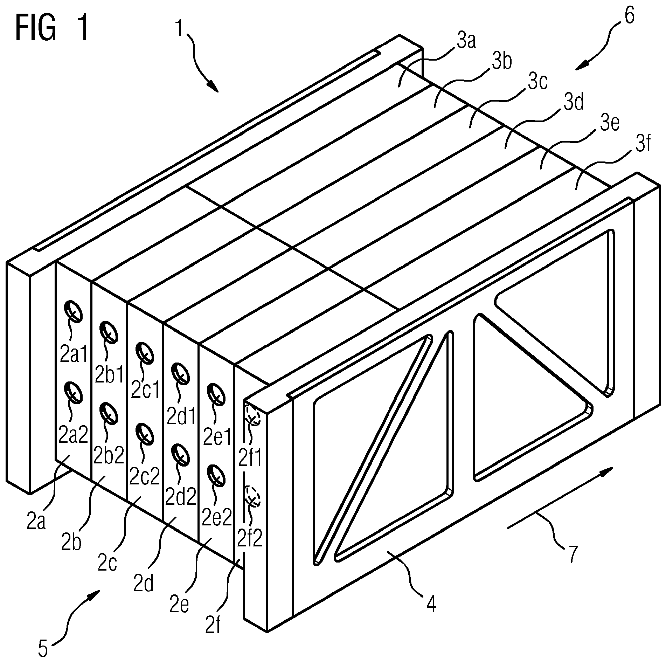

Im Einzelnen ist in Figur 1 eine elektrische Einrichtung 1 dargestellt. Die elektrische Einrichtung 1 umfasst eine Mehrzahl von leistungselektronischen Modulen 2a-2f, die ein einer Reihenschaltung miteinander verbindbar sind. Jedem der Module 2a-2f ist ein Energiespeicher 3a-3f zugeordnet. Das leistungselektronische Modul 2a ist mit dem zugeordneten Energiespeicher 3a mittels einer Klemmverbindung elektrisch verbindbar. Entsprechend sind jeder der übrigen Module 2b-2f mit ihnen zugeordneten Energiespeichern 3b-3f elektrisch verbindbar. Sowohl die Module 2a-2f als auch die Energiespeicher 3a-3f umfassen eigene, quaderförmige Gehäuse auf.

Die elektrische Einrichtung 1 umfasst ferner eine Tragestruktur 4 auf. Die Module 2a-2f und die Energiespeicher 3a-3f werden von der Tragestruktur 4 getragen und gestützt. Zudem bildet die Tragestruktur 4 eine Stützung für eine Spannvorrichtung, mittels der die leistungselektronischen Module 2a-2f in einem mechanischen Spannverband miteinander mechanisch verspannt sind. Die elektrische Verbindung der Module 2a-2f miteinander erfolgt über Anschlüsse 2a1-2f1 und 2a2-2f2, die zu einer Frontseite 5 der Einrichtung 1 angeordnet sind.

Die Energiespeicher 3a-3f sind in der Tragestruktur 4 bewegbar gelagert. Dabei kann jeder Energiespeicher 3a-3f in Richtung zu einer Rückseite 6 der elektrischen Einrichtung 1 hin verlagert werden. Diese Verlagerung erfolgt im dargestellten Ausführungsbeispiel entlang einer mittels eines Pfeils 7 angedeuteten Richtung.

Falls beispielsweise ein Austausch des Moduls 2b notwendig ist, wird folgendermaßen vorgegangen. Zunächst wird die Verbindung zwischen dem Modul 2b und dem zugeordneten Energiespeicher 3b gelöst. Dazu kann die Klemmverbindung mittels eines entsprechenden Werkzeugs über einen geeigneten Zugangsweg von oberhalb der Tragestruktur 4 gelöst werden. Ist die Verbindung gelöst, so wird der Energiespeicher 2b in Richtung des Pfeils 7 verlagert, so dass der Abstand zwischen dem Modul 2b und dem Energiespeicher 3b vergrößert wird. Dadurch wird es einem Wartungsarbeiter ermöglicht, den Spannverband der Module 2a-2f zu lockern. Schließlich wird das Modul 2b aus der Tragestruktur 4 herausgenommen und kann beispielsweise durch ein fehlerfreies Modul oder ein fehlerhaftes Bauteil innerhalb des Moduls durch ein fehlerfreies Bauteil ersetzt werden.

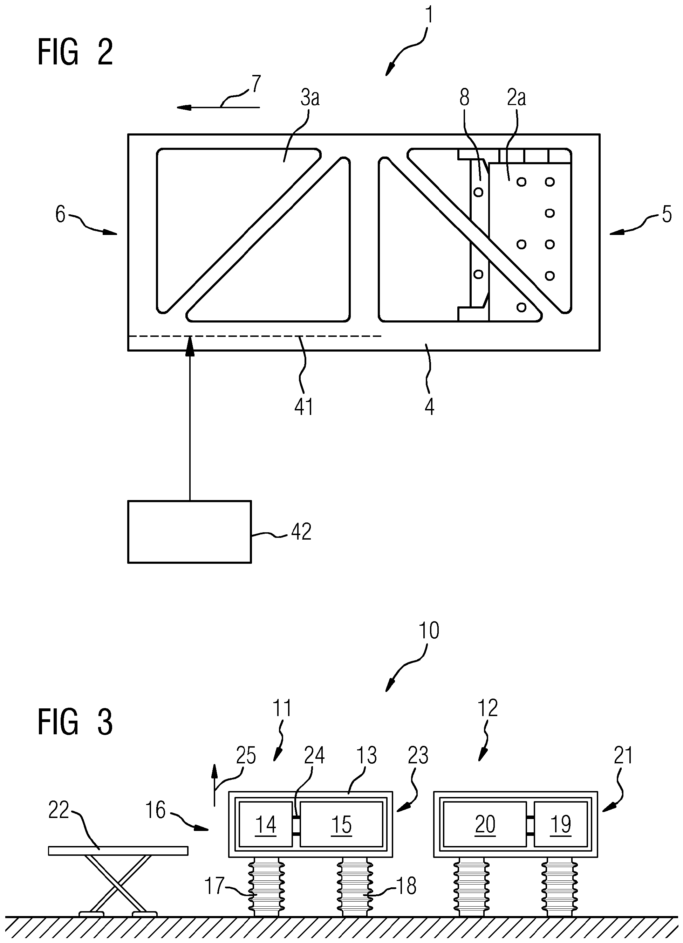

Figur 2 zeigt eine Seitenansicht der elektrischen Einrichtung 1 der Figur 1. Gleiche und gleichartige Bauteile und Elemente sind in den Figuren 1 und 2 mit gleichen Bezugszeichen versehen. Es ist erkennbar, dass das leistungselektronische Modul 2a mittels einer Klemmverbindung 8 mit dem Energiespeicher 3a verbunden ist. Die Tragestruktur 4 bildet einen festen Rahmen, der das Modul 2a und den Energiespeicher 3a trägt.

Die Verlagerung des Energiespeichers 3a erfolgt entlang von Führungsschienen, die in Figur 2 mittels einer unterbrochenen Linie 41 angedeutet ist. Die Bewegung des Energiespeichers 3a kann vom Wartungsarbeiter mittels eines Spindelsystems 42 ohne manuellen Eingriff in die Tragestruktur 4 durchgeführt werden.

In Figur 3 ist eine Anordnung 10 in einer Seitenansicht dargestellt, die eine erste elektrische Einrichtung 11 und eine zweite elektrische Einrichtung 12 umfasst. Die erste elektrische Einrichtung 11 umfasst eine Tragestruktur 13, die dazu eingerichtet ist, ein leistungselektronisches Modul 14 und einen Energiespeicher 15 aufzunehmen. Das Modul 14 ist zu einer Frontseite 16 der Einrichtung 11 angeordnet. Die Tragestruktur 13 ist mittels Isolierstützen 17 und 18 am Untergrund abgestützt. Eine zur ersten elektrischen Einrichtung 11 baugleich ausgebildete zweite elektrische Einrichtung 12 mit einem leistungselektronischen Modul 19 und einem Energiespeicher 20 ist mit ihrer Frontseite 21 zur ersten elektrischen Einrichtung 11 abgewandt angeordnet.

Eine Wartungsbühne 22 ist zu Wartungszwecken an der Frontseite der ersten elektrischen Einrichtung 11 aufgebaut. Eine Positionierung der Wartungsbühne 22 zwischen den beiden elektrischen Einrichtungen 11 und 12 ist aus Mangel an entsprechendem Freiraum nicht möglich.

Zu Wartungszwecken betritt ein Wartungsarbeiter die Wartungsbühne. Mittels eines in Figur 3 nicht dargestellten Spindelsystems kann der Energiespeicher 15 zu einer Rückseite 23 der ersten elektrischen Einrichtung 11 hin bewegt werden, nachdem eine Verbindung 24 zwischen dem Modul 14 und dem Energiespeicher 15 getrennt worden ist. Danach kann das Modul 14 in Richtung eines Pfeils 25 bewegt und aus der Tragstruktur 13 herausgenommen werden.

## Patentansprüche

1. Elektrische Einrichtung (1) zum einsetzen in in einem modularen Mehrstufenumrichter einer Hochspannungsgleichstromübertragungsanlage, mit einem leistungselektronischen Modul (2a-2f) in einer Tragestruktur (4), wobei die elektrische Einrichtung (1) ferner einen Energiespeicher (3a-3f) umfasst, wobei der Energiespeicher (3a-3f) und das leistungselektronischen Modul (2a-2f) gemeinsam in der Tragestruktur (4) angeordnet und miteinander lösbar verbunden sind, wobei der Energiespeicher (3a-3f) bewegbar gelagert ist, wobei
das leistungselektronische Modul an einer Frontseite der Tragestruktur und der Energiespeicher an einer Rückseite der Tragestruktur angeordnet sind,
**dadurch gekennzeichnet, dass** der Energiespeicher derart bewegbar gelagert ist, dass er zur Rückseite hin verlagerbar ist, wobei
der Abstand zwischen dem Modul und dem Energiespeicher vergrößerbar ist.

2. Elektrische Einrichtung (1) nach einem der vorangehenden Ansprüche, wobei die Tragestruktur (4) Führungsschienen (41) umfasst, so dass der Energiespeicher (3a-3f) entlang der Führungsschienen (41) verlagerbar ist.

3. Elektrische Einrichtung (1) nach einem der vorangehenden Ansprüche, wobei die Einrichtung (1) ein Spindelsystem (42) zum Bewegen des Energiespeichers (3a-3f) umfasst.

4. Elektrische Einrichtung (1) nach Anspruch 3, wobei eine Drehbewegung einer drehbaren Spindel des Spindelsystems (42) in eine Längsbewegung des Energiespeichers (3a-3f) übertragbar ist.

5. Elektrische Einrichtung (1) nach einem der vorangehenden Ansprüche, wobei die lösbare Verbindung zwischen Modul (2a-2f) und Energiespeicher (3a-3f) eine lösbare Klemmverbindung ist.

6. Elektrische Einrichtung (1) nach einem der vorangehenden Ansprüche, wobei das leistungselektronische Modul (2a-2f) wenigstens einen Leistungshalbleiterschalter umfasst.

7. Elektrische Einrichtung (1) nach einem der vorangehenden Ansprüche, wobei der Energiespeicher (3a-3f) ein Kondensator ist.

8. Elektrische Einrichtung (1) nach einem der vorangehenden Ansprüche, wobei das leistungselektronische Modul (2a-2f) mit weiteren leistungselektronischen Modulen (2a-2f) in einem Spannverband mechanisch verspannt ist.

9. Elektrische Einrichtung (1) nach einem der vorangehenden Ansprüche, wobei das Modul (2a-2f) eine Arbeitsspannung von 1 kV bis 10 kV aufweist.

10. Verfahren zum Warten einer elektrischen Einrichtung (1) gemäss Einspruch 1, mit einem leistungselektronischen Modul (2a-2f) sowie einem Energiespeicher (3a-3f), die gemeinsam in einer Tragestruktur (4) angeordnet sind und miteinander lösbar verbunden sind, bei dem im Falle eines Fehlers des Moduls (2a-2f)
- die Verbindung (8) zwischen dem Modul (21-2f) und dem Energiespeicher (3a-3f) gelöst wird, worauf
- der Energiespeicher (3a-3f) zu einer Rückseite der Tragestruktur bewegt wird, wobei ein Abstand zwischen dem Energiespeicher (3a-3f) und dem Modul (2a-2f) vergrößert wird,
- das Modul (2a-2f) aus der Tragestruktur (4) herausgenommen wird.

## Claims

1. Electrical device (1) for use in a modular multilevel converter of a high-voltage direct current transmission system, having a power electronics module (2a-2f) in a supporting structure (4), wherein
the electrical device (1) also comprises an energy storage unit (3a-3f), wherein the energy storage unit (3a-3f) and the power electronics module (2a-2f) are arranged together in the supporting structure (4) and are connected to one another in a releasable manner, wherein the energy storage unit (3a-3f) is mounted in a movable manner, wherein
the power electronics module is arranged on a front side of the supporting structure and the energy storage unit is arranged on a rear side of the supporting structure,
**characterized in that**
the energy storage unit is mounted in a movable manner in such a way that it can be displaced towards the rear side, wherein the distance between the module and the energy storage unit can be increased.

2. Electrical device (1) according to the preceding claim, wherein the supporting structure (4) comprises guide rails (41) such that the energy storage unit (3a-3f) can be displaced along the guide rails (41).

3. Electrical device (1) according to either of the preceding claims, wherein the device (1) comprises a spindle system (42) for moving the energy storage unit (3a-3f).

4. Electrical device (1) according to Claim 3, wherein a rotary movement of a rotatable spindle of the spindle system (42) can be translated into a longitudinal movement of the energy storage unit (3a-3f).

5. Electrical device (1) according to one of the preceding claims, wherein the releasable connection between the module (2a-2f) and the energy storage unit (3a-3f) is a releasable clamping connection.

6. Electrical device (1) according to one of the preceding claims, wherein the power electronics module (2a-2f) comprises at least one power semiconductor switch.

7. Electrical device (1) according to one of the preceding claims, wherein the energy storage unit (3a-3f) is a capacitor.

8. Electrical device (1) according to one of the preceding claims, wherein the power electronics module (2a-2f) is mechanically braced in a tensioning brace with further power electronics modules (2a-2f).

9. Electrical device (1) according to one of the preceding claims, wherein the module (2a-2f) has an operating voltage of from 1 kV to 10 kV.

10. Method for maintaining an electrical device (1) according to Claim 1, having a power electronics module (2a-2f) and an energy storage unit (3a-3f) that are arranged together in a supporting structure (4) and are connected to one another in a releasable manner, in which, in the event of a fault in the module (2a-2f),
- the connection (8) between the module (21-2f) and the energy storage unit (3a-3f) is released, whereupon
- the energy storage unit (3a-3f) is moved to a rear side of the supporting structure, wherein a distance between the energy storage unit (3a-3f) and the module (2a-2f) is increased,
- the module (2a-2f) is removed from the supporting structure (4) .

## Revendications

1. Dispositif (1) électrique à utiliser dans un convertisseur modulaire à plusieurs étages d'une installation de transport de courant continu sous haute tension, comprenant un module (2a-2f) électronique de puissance dans une structure (4) de support, dans lequel le dispositif (1) électrique comprend en outre un accumulateur (3a-3f) d'énergie, dans lequel l'accumulateur (3a-3f) d'énergie et le module (2a-2f) électronique de puissance sont disposés conjointement dans la structure (4) de support et sont reliés entre eux de manière amovible, dans lequel l'accumulateur (3a-3f) d'énergie est monté mobile, dans lequel
le module électronique de puissance est disposé d'un côté avant de la structure de support et l'accumulateur d'énergie d'un côté arrière de la structure de support,
**caractérisé en ce que**
l'accumulateur d'énergie est monté mobile, de manière à pouvoir être déplacé vers le côté arrière, dans lequel
la distance entre le module et l'accumulateur d'énergie peut être agrandie.

2. Dispositif (1) électrique suivant l'une des revendications précédentes, dans lequel la structure (4) de support comprend des rails (41) de guidage, de manière à pouvoir déplacer l'accumulateur (3a-3f) d'énergie sur les rails (41) de guidage.

3. Dispositif (1) électrique suivant l'une des revendications précédentes, dans lequel le dispositif (1) comprend un système (42) à broche pour déplacer l'accumulateur (3a-3f) d'énergie.

4. Dispositif (1) électrique suivant la revendication 3, dans lequel un mouvement en rotation d'une broche tournante du système (42) à broche peut être transformé en un mouvement longitudinal de l'accumulateur (3a-3f) d'énergie.

5. Dispositif (1) électrique suivant l'une des revendications précédentes, dans lequel la liaison amovible entre le module (2a-2f) de l'accumulateur (3a-3f) d'énergie est un serrage amovible.

6. Dispositif (1) électrique suivant l'une des revendications précédentes, dans lequel le module (2a-2f) électronique de puissance comprend au moins un interrupteur à semi-conducteur de puissance.

7. Dispositif (1) électrique suivant l'une des revendications précédentes, dans lequel l'accumulateur (3a-3f) d'énergie est un condensateur.

8. Dispositif (1) électrique suivant l'une des revendications précédentes, dans lequel le module (2a-2f) électronique de puissance est bloqué mécanique avec d'autres modules (2a-2f) électroniques de puissance en un assemblage serré.

9. Dispositif (1) électrique suivant l'une des revendications précédentes, dans lequel le module (2a-2f) a une tension de travail de 1 kV à 10 kV.

10. Procédé d'entretien d'un dispositif (1) électrique suivant la revendication 1,
comprenant un module (2a-2f) électronique de puissance ainsi qu'un accumulateur (3a-3f) d'énergie, qui sont disposés conjointement dans une structure (4) de support et qui sont reliés l'un à l'autre de manière amovible, dans lequel, dans le cas d'un défaut du module (2a-2f),
- on défait la liaison (8) entre le module (2a-2f) et l'accumulateur (3a-3f) d'énergie, puis
- on déplace l'accumulateur (3a-3f) d'énergie vers un côté arrière de la structure de support en agrandissant ainsi une distance entre l'accumulateur (3a-3f) d'énergie et le module (2a-2f),
- on retire le module (2a-2f) de la structure (4) de support.
